# FASCICULE DE BREVET EUROPEEN

(11) **EP 0 452 188 B1**
(45) Date de publication et mention de la délivrance du brevet: **19.04.1995**
(21) Numéro de dépôt: 91400868.5
(22) Date de dépôt: 29.03.1991
(51) Int. Cl.: H04N 3/08

(54) **Dispositif d'imagerie et de surveillance à détecteur matriciel**
Abbildungs- und Überwachungsvorrichtung mit Matrixsensor
Monitoring and imaging device with matrix sensor

(30) Priorité: 02.04.1990 FR 9004181
(43) Date de publication de la demande: 16.10.1991
(73) Titulaire: SOCIETE D'APPLICATIONS GENERALES D'ELECTRICITE ET DE MECANIQUE SAGEM, F-75016 Paris (FR)
(72) Inventeur: Metivier, Philippe, F-78300 Poissy (FR); Encaoua, Serge, F-92110 Clichy (FR)
(74) Mandataire: Fort, Jacques

(56) Documents cités:
- EP-A- 0 298 606
- GB-A- 2 180 719

## Description

L'invention concerne les dispositifs d'imagerie du type comportant pour capter une scène composée de trames successives, qui se recouvrent l'une l'autre partiellement, une caméra ayant un organe sensible constitué par une matrice de capteurs à accumulation de charges, en forme de barrette ayant plusieurs colonnes de capteurs accolées et disposées dans une première direction du champ de la caméra ; un miroir de balayage dans la direction perpendiculaire à ladite première direction dans le champ de la caméra, permettant de former l'image d'une même tranche d'une scène, cette branche étant située dans le champ de la caméra successivement sur les colonnes de la matrice ; et des moyens de décalage des charges d'une colonne à la suivante à une cadence déterminée, synchronisée avec le déplacement de l'image de la tranche sur la matrice.

De tels dispositifs, utilisés pour constituer des caméras d'imagerie thermique, incorporent une matrice de capteurs infra-rouge, souvent en forme de barrette de quatre colonnes de chacune 288 éléments, accolées à une colonne d'éléments de transfert de charges. Classiquement, on utilise un miroir de balayage animé d'un mouvement en dents de scie, parcourant la zone image à une vitesse angulaire Vₒ qui est habituellement comprise entre 250 et 350°/seconde, pendant 14 ms, effectuant un mouvement de retour en 6 ms environ si on souhaite obtenir une fréquence d'image de 50 Hz. En synchronisant la vitesse de balayage de la scène par le miroir et la durée d'intégration sur l'organe sensible, on réalise une addition synchrone des charges intégrées sur les quatre capteurs successivement balayés, et on obtient une augmentation du rapport signal à bruit de l'ordre de √4 = 2. Les charges accumulées sont stockées physiquement dans un élément de la colonne de transfert de charges ou CCD utilisée en registre à décalage dont le contenu est transféré en série à un appareil de traitement d'images, en vue d'un affichage sur un écran de visualisation ou de la mise en oeuvre d'une procédure d'identification d'objets ayant des caractéristiques particulières.

Pour obtenir une représentation d'une scène dont le développement angulaire, dans le sens de déplacement du miroir, est très supérieur à celui offert par l'image normale fournie par la caméra, tout en conservant une sommation synchrone des charges sans modification de la cadence de décalage des charges d'une colonne à la suivante, le dispositif peut comporter également des moyens, dits d'exploration ou de visée, permettant de parcourir la scène dans ladite autre direction de champ. L'exploration angulaire par les moyens d'exploration s'effectue à vitesse angulaire déterminée, plus faible que celle du miroir de balayage, avec une amplitude plus élevée. Des moyens permettent de donner au miroir de balayage une vitesse telle que la vitesse angulaire de la ligne de visée par rapport à la matrice de capteurs reste égale à la vitesse nominale V₀ de balayage et que la cadence de décalage des charges d'une colonne à la suivante reste elle-même à la cadence nominale. Il est avantageux de donner aux trames successives (correspondant chacune à l'amplitude de déplacement du miroir de balayage pour former une trame) un recouvrement au moins égal à 1/2 entre deux trames successives.

Un tel dispositif permet aussi bien la veille sectorielle (dans laquelle un miroir d'exploration est animé d'un mouvement d'aller-retour) que la veille panoramique (les moyens d'exploration étant alors constitués par un miroir animé d'un mouvement continu de rotation ou étant destinés à faire tourner le dispositif dans son ensemble d'un mouvement continu, généralement en azimut).

L'invention vise à fournir un dispositif d'imagerie permettant à la fois une veille sectorielle et panoramique et une visualisation permanente, à résolution accrue, d'une fraction d'une trame particulière, sans pour autant perturber la veille.

Dans ce but, l'invention propose un dispositif d'imagerie du type ci-dessus défini, caractérisé en ce qu'il comprend également :
- des moyens d'exploration angulaire dans ladite direction perpendiculaire, à une vitesse angulaire déterminée, plus faible que celle du miroir de balayage et d'amplitude angulaire plus élevée,
- un premier et un second trajets optiques utilisables l'un ou l'autre, en amont du miroir de balayage dans le sens de propagation de la lumière, le second trajet ayant un grossissement supérieur à celui du premier et ayant un miroir de déviation dans la direction des colonnes,
- des moyens de commande du miroir de balayage lui donnant, lors de l'utilisation du premier trajet, une vitesse telle que la vitesse angulaire de la ligne de visée par rapport à la matrice corresponde à la cadence de décalage des charges d'une colonne à la suivante et que les trames successives (correspondant chacune à l'amplitude de déplacement du miroir de balayage) aient un recouvrement au moins égal à 1/2 et donnant au miroir de balayage, lors de l'utilisation du second trajet, une vitesse différente, choisie de façon que la vitesse angulaire de la ligne de visée par rapport à la matrice corresponde encore à la cadence de décalage des charges pour une vitesse des moyens d'exploration angulaire inchangée.

Le dispositif permet de substituer, à une trame dont l'ouverture angulaire à l'entrée du dispositif est telle qu'il y ait un recouvrement d'au moins 1/2, une trame d'ouverture angulaire nettement plus faible, donc fournissant une meilleure résolution. L'image à haute résolution ainsi fournie peut être exploitée par des circuits ou affichée sur un moniteur qui donnera une image fixe, dont l'emplacement dans la première direction est ajustable à l'aide du miroir de déviation, rafraîchie à une cadence qui est fixée par la fréquence de répétition de l'exploration sectorielle ou panoramique. La fourniture de cette image ne trouble pas la représentation de veille, puisqu'elle utilise la redondance due au recouvrement.

Dans un mode particulièrement simple de réalisation de l'invention, le rapport des grossissements est choisi de façon que la vitesse angulaire de la ligne de visée par rapport à la matrice lors de l'utilisation de la seconde voie corresponde à la vitesse de décalage des charges lorsque le miroir de balayage est arrêté.

Pour éviter la nécessité de moyens d'obturation de trajet optique, permettant à volonté d'utiliser une voie ou l'autre, il est avantageux de prévoir les moyens de commande du miroir de balayage de façon qu'ils permettent de donner au miroir de balayage, lors de l'utilisation de la seconde voie, une position en dehors de sa plage de débattement en vue du balayage lors de l'utilisation de la première voie. Cette disposition permet d'effectuer un "vol de trame", en formant sur la matrice l'image d'une zone de la scène qui correspond à une partie de la zone visualisée au cours de la trame précédente en fonctionnement de veille utilisant la première voie.

L'invention sera mieux comprise à la lecture de la description qui suit d'un mode particulier de réalisation, donné à titre d'exemple non limitatif. La description se réfère aux dessins qui l'accompagnent, dans lesquels :
- la Figure 1 est un schéma de principe montrant les composants essentiels d'un dispositif selon l'invention ;
- la Figure 2 montre, de façon schématique, une disposition relative des composants optiques d'un dispositif selon la Figure 1 ;
- la Figure 3 est un schéma montrant les portions de la scène représentées par des trames successives, lors de l'utilisation d'une première voie, dans le cas d'un recouvrement égal à 1/2 ;
- la Figure 4, similaire à la Figure 3, montre l'emplacement d'une imagette pouvant être visualisée pour effectuer une surveillance, sans perturbation du fonctionnement en veille ;
- la Figure 5 montre schématiquement une disposition relative possible des éléments concernés par l'invention d'un dispositif répondant au schéma fontionnel de la Figure 1 ;
- les Figures 6A, 6B et 6C sont des diagrammes représentant la variation en fonction du temps de l'élongation angulaire α_{d} du miroir de déviation, α_{b} du miroir de balayage et αₑ du miroir d'exploration ;
- la Figure 7 montre schématiquement le décalage angulaire des images fournies pour des balayages successifs T1, T2, T3, T4,... de la matrice.

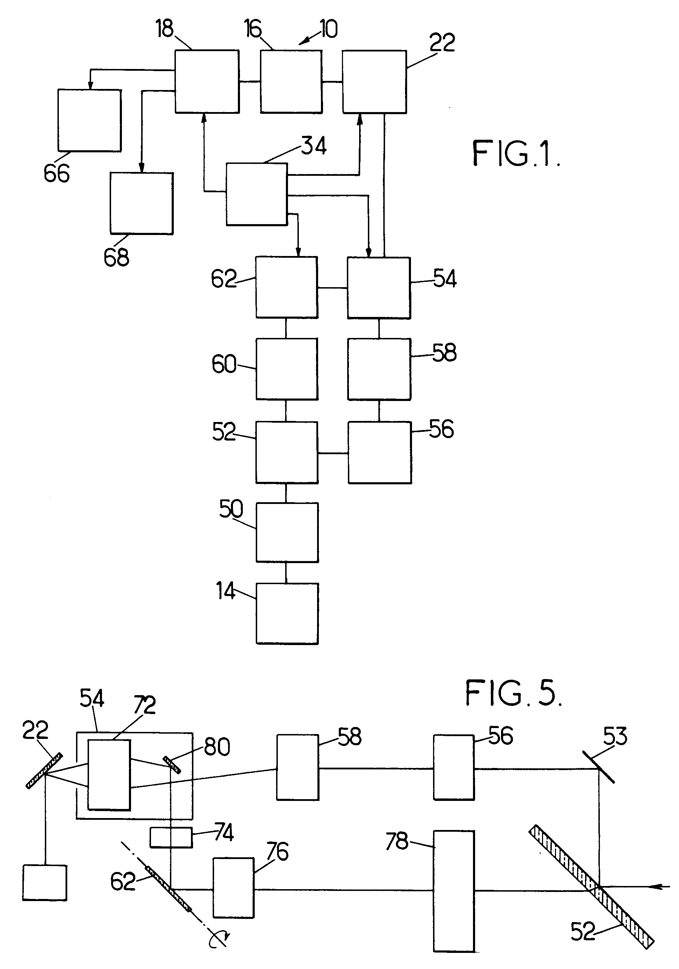

Le dispositif dont le schéma fonctionnel est montré en Figure 1 peut être considéré comme comprenant une caméra 10 et des moyens d'exploration 14 permettant d'explorer angulairement une scène à vitesse constante, par exemple en azimut. Les moyens 14 peuvent par exemple être un miroir de visée effectuant une exploration sectorielle avec retour rapide, ou des moyens permettant de faire tourner la caméra à vitesse constante pour autoriser une veille panoramique.

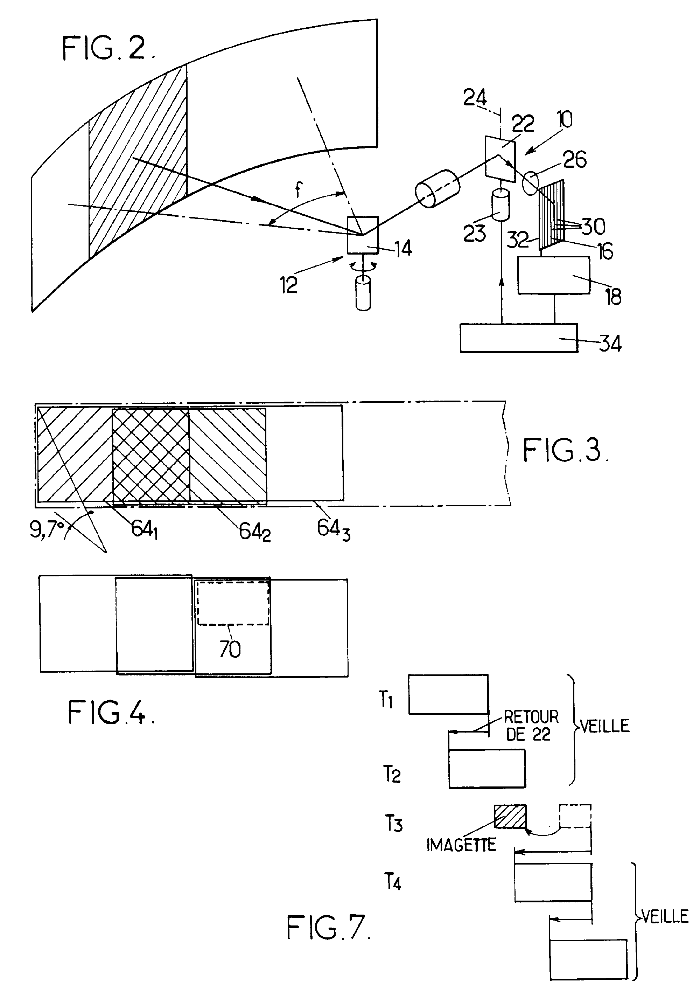

La caméra 10 dont le schéma fonctionnel est donné en Figures 1 et 2 comporte un module imageur 16 à matrice de capteurs à accumulation de charges, un module détecteur 18 et un miroir de balayage 22 tournant autour d'un axe 24 parallèle à l'axe autour duquel s'effectue l'exploration. Dans le cas illustré en Figure 2, la matrice est constituée de plusieurs colonnes accolées de capteurs 30, les capteurs de même ordre dans toutes les colonnes étant couplés à un même élément 32 d'une barrette CCD. Les colonnes sont orientées parallèlement à l'axe du miroir de balayage 22, de sorte que l'image d'une même tranche de la scène se forme successivement sur chacune des colonnes, au cours du balayage, indiqué par la flèche f. Le module détecteur 18 commande le transfert des charges accumulées par le capteur d'une colonne à la suivante, à une cadence prédéterminée. Cette cadence doit être telle qu'il y ait addition synchrone des charges accumulées par quatre capteurs successifs.

Par la suite, on supposera, à titre de simple exemple, que la caméra 10 est une caméra sensible dans l'infrarouge, utilisant une matrice dite "CCD" de 4 x 288 capteurs, le boîtier 34 synchronisant la cadence de décalage des charges et la rotation du miroir 22 par commande de son moteur d'entraînement de façon à fournir l'image à une fréquence de 50 Hz, de type télévision. En l'absence d'exploration, le miroir de balayage 22 doit être animé d'un mouvement en dents de scie, fournissant un balayage de la scène. Pratiquement, la vitesse Vₒ de balayage de la scène varie, suivant notamment la géométrie de la matrice 16, entre 250 et 1 000°/s. Dans ce qui suit, on supposera, pour simplifier, que la vitesse de balayage donnée par le miroir de balayage, entraîné par un moteur 23, est de 182°/s, que la durée du balayage est de 15 ms (la durée de retour étant de 5 ms), que la vitesse de déplacement donnée par le miroir de balayage est de 111°/s et que l'exploration est panoramique, ce qui se traduit par une vitesse de balayage de la matrice V₀ = 293°/s, correspondant à la vitesse de décalage des charges imposée par le module 18.

Le parcours de la lumière en amont du miroir 22 comporte une partie commune et deux voies qui sont utilisées l'une ou l'autre.

Dans le cas illustré sur la Figure 1, la partie commune comporte un objectif afocal de tête 50, qui peut constituer également dérotateur, suivi d'un bloc optique 52 de séparation de faisceau entre une voie à grand champ et faible grossissement et une voie à petit champ et grossissement fort, recombinées par un bloc mutiplexeur optique 54.

La voie à grand champ est schématisée sur la Figure 1 par un afocal 56 de grossissement égal à 1, qui peut être suivi par un dérotateur 58.

La disposition décrite jusqu'ici, exception faite de la présence de la voie à petit champ, est similaire à celle de la demande FR n° 89 05822, à laquelle on pourra se reporter.

La voie à petit champ comprend un afocal 60, de grossissement G supérieur à 1, suivi d'un miroir 62 de déviation rapide dans le sens des colonnes, c'est-à-dire orthogonalement au sens de balayage par le miroir 22.

Le miroir 62, comme le miroir 22, est muni d'un moteur électrique d'entraînement commandé par le boîtier électronique 34 dont les fonctions seront indiquées plus loin.

La voie à grand champ est utilisée pour la veille sectorielle ou panoramique. Le boîtier 34 commande alors le moteur du miroir de balayage 22 pour donner à ce miroir une vitesse telle que la tranche de la scène dont l'image se forme sur la matrice parcoure celle-ci en synchronisme avec le transfert des charges. L'amplitude de balayage est telle que deux trames successives présentent un recouvrement d'au moins 1/2 ; l'image de tout point de la scène apparait donc au moins deux fois successivement.

Dans le cas illustré sur la Figure 3, le recouvrement des trames successives 64₁, 64₂, 64₃, est de 1/2.

On peut ainsi fournir à un circuit d'exploitation ou afficher, sur un moniteur 66, une représentation de veille de tout un secteur, par exploration à une cadence qui dépend de la vitesse d'exploration donnée par les moyens 14.

Pour des motifs qui seront exposés plus loin, et notamment pour permettre de se dispenser de moyens d'obturation en vue de sélectionner une voie ou l'autre, le moteur électrique de commande du miroir de balayage 22 est avantageusement prévu pour amener ce miroir dans une position angulaire située en dehors de la plage angulaire nécessaire au balayage lors du fonctionnement en veille sectorielle.

La présence de la seconde voie, à fort grossissement, permet d'obtenir, par exemple sur un autre moniteur 68, une représentation permanente d'une portion de scène correspondant à une "imagette" constituée par une fraction d'une trame qui dépend du rapport entre les grossissements des deux voies.

La Figure 4 montre le cas d'une imagette 70 ayant une ouverture angulaire dans chaque sens égale à la moitié de celle d'une trame. La position de l'imagette dans le sens des colonnes est ajustable par commande du moteur du miroir de déviation 62. Sur la Figure 4, cette imagette est dans la position la plus haute possible, c'est-à-dire correspondant à l'angle de site maximum.

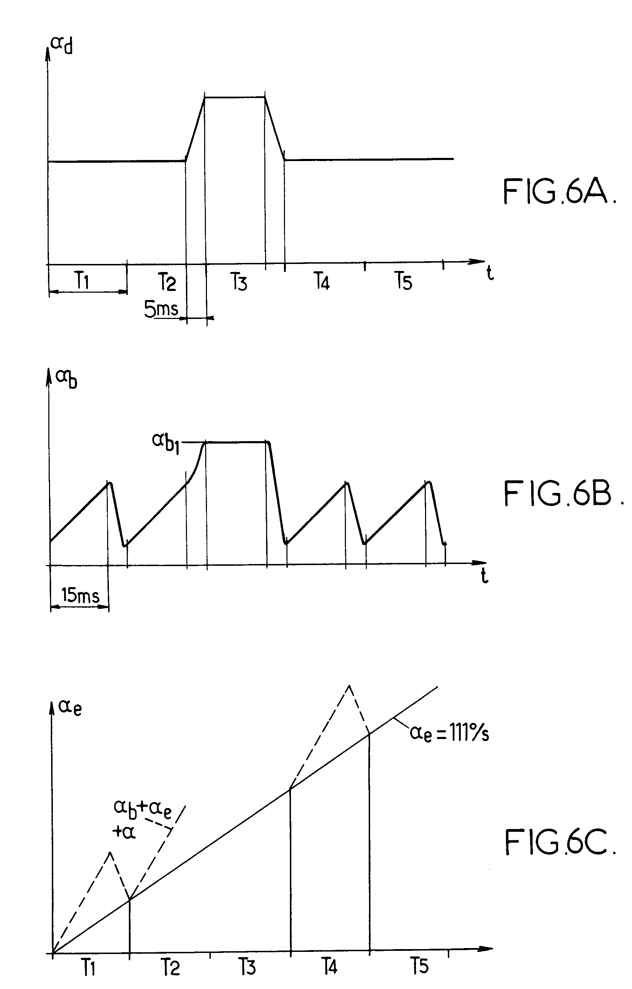

La Figure 5 montre une constitution possible des composants concernés par l'invention d'un dispositif répondant au schéma fonctionnel de la Figure 1. Le séparateur 52 peut être constitué par une optique à occultation centrale vers la voie à petit champ, prévue pour que les pupilles d'entrée des deux voies soient concentriques. L'ensemble constitué par la lentille 56, le dérotateur éventuelle 58 et l'optique 72 de projection incluse dans le bloc multiplexeur 54 constitue l'afocal de grossissement 1 conjuguant approximativement le miroir de balayage 22 et le séparateur 52. Sur la voie à fort grossissement, l'afocal 60 de la Figure 1, ayant un grossissement G, est constitué par l'optique de projection 72 et les lentilles 74, 76 et 78. Les lentilles 72 et 74 constituent un afocal de grossissement sensiblement égal à 1 conjuguant approximativement le miroir de balayage 22 et le miroir 62 de déviation rapide en site (dans la direction des colonnes). L'afocal de grossissement G conjugue le miroir de balayage 22 et le séparateur 52. Les optiques sur la voie de grossissement 1 (58, 56, 53, 52) et les optiques sur la voie de grossissement 2 (74, 62, 76, 78) permettent de plus un réalignement des axes centraux des images selon les deux grossissements.

Le fonctionnement du dispositif est le suivant, l'exploration étant effectuée à vitesse angulaire constante αₑ, comme indiqué en traits pleins sur la Figure 6C.

En mode "veille", la voie à grand champ est utilisée, de la façon déjà décrite dans la demande FR n° 89 05822. Le balayage s'effectue à vitesse constante pendant une fraction déterminée de la période de trame, à vitesse α_{b}, avec retour rapide. Les trames successives présentent un recouvrement d'approximativement 1/2, comme indiqué pour les trames 64₁ et 64₂ sur la Figure 3, T1 et T2 sur la Figure 7.

Le passage en mode "affichage en champ réduit" ou "vol de trame" peut être commandé une ou plusieurs fois au cours de l'exploration, mais au plus une fois toutes les deux trames dans le cas d'un recouvrement égal à 1/2. Ce passage peut être commandé soit par un opérateur ayant observé un point suspect au cours d'une séquence d'exploration, soit automatiquement. Dans le cas d'un passage automatique, l'identification d'un point brillant suspect provoque la commutation en mode "affichage en champ réduit" pour la trame appropriée et la commande du miroir de déviation 62 de façon à centrer l'imagette sur le point suspect. Dans le cas d'une commande manuelle, l'opérateur qui repère un point brillant indique celui-ci au boîtier 34 par des moyens de pointage quelconques, tels que boule, manche à balai ou souris de déplacement d'un index sur l'écran. L'indication ainsi donnée est mémorisée et lorsque le dispositif repasse sur la zone désignée, en mode veille, il présente l'imagette.

Lors du passage en mode "affichage champ réduit", tel qu'il est schématisé en Figures 6A, 6B, 6C et 7, le miroir de balayage 22 est amené, pendant le laps de temps affecté normalement au retour-trame, dans une position située au-delà de sa plage de balayage, pour mettre en service la voie à champ réduit et grossissement élevé. Dans le cas schématisé sur la Figure 6B, le grossissement G est choisi de façon que l'image de la scène se déplace sur la matrice à la cadence de décalage des charges lorsque le miroir de balayage est arrêté. Cette solution, particulièrement commode, n'est cependant pas indispensable et on pourrait également constituer un dispositif où le miroir de balayage n'est pas arrêté pendant toute la durée de la trame T3, comme sur la Figure 6B, mais simplement ralenti ou même animé d'un mouvement inversé.

Pendant la période de retour-trame, le miroir de déviation 62 est lui-même amené dans une position telle que l'imagette soit centrée dans le sens des colonnes, c'est-à-dire en site, sur le point brillant indiqué. L'élongation α_{b1} donnée au miroir de balayage 22 est telle que l'imagette soit centrée dans le sens transversal aux colonnes, c'est-à-dire en azimut, sur le point brillant indiqué.

Pendant la trame T3 ainsi détournée, la scène est balayée uniquement par le miroir d'exploration qui conserve sa vitesse de veille.

A la fin du mode "affichage champ réduit", le miroir de balayage revient dans sa position d'origine, en une durée au plus égale à celle du retour trame, pour reprendre son balayage normal.

On voit qu'on peut ainsi observer en temps masqué une cible détectée au cours de la veille, avec une résolution qui, dans le cas illustré, est trois fois meilleure que pour la détection. La fréquence de rafraîchissement de l'information à haute résolution est la même que celle de l'image obtenue pour la veille.

Un dispositif conforme à l'invention ayant les caractéristiques suivantes, a donné de bons résultats, avec une caméra CCD sensible dans l'infrarouge, ayant une matrice présentant, à l'entrée du module imageur 16, un champ vertical de 9,7° et ayant un miroir de balayage 22 dont l'amplitude maximale de balayage en azimut (dans le sens transversal aux colonnes) est de 25°.

Le multiplexage des deux voies était effectué au foyer de l'optique 72, dont la focale était d'environ 30 mm, par un miroir 80 reprenant une partie du champ sur la voie à fort grossissement G = 3 (voie réfléchie). Le miroir de déviation 62 avait un angle de débattement de 10°.

Lors du fonctionnement en mode "veille", le miroir de balayage 22 avait une vitesse de 180°/s pendant 15 ms et le retour s'effectuait en 5 ms. L'exploration s'effectuait à une vitesse de 111°/s. Lors du passage en mode "affichage en champ réduit", le miroir de balayage était amené dans une position fixe, située en dehors de la zone de balayage grand champ.

Les moteurs d'entraînement actuels et les systèmes d'asservissement en vitesse et en position utilisant les techniques numériques permettent d'obtenir sans difficulté les vitesses de déflexion et de ralliement nécessaires pour le fonctionnement illustré en Figures 6A-6C et d'obtenir une surveillance panoramique avec rafraîchissement de l'image à 50 Hz.

## Revendications

1. Dispositif d'imagerie pour capter une scène composée de trames successives, qui se recouvrent l'une l'autre partiellement comportant une caméra (10) ayant un organe sensible constitué par une matrice de capteurs (30) à accumulation de charges, en forme de barrette ayant plusieurs colonnes de capteurs accolées et disposées dans une première direction du champ de la caméra, un miroir de balayage (22) dans la direction perpendiculaire à ladite première direction dans le champ de la caméra, muni de moyens d'entraînement permettant de former l'image d'une même tranche d'une scène, cette tranche étant située dans le champ de la caméra successivement sur les différentes colonnes de la matrice ; et des moyens de décalage des charges d'une colonne à la suivante à une cadence déterminée, synchronisée avec le déplacement de l'image de la tranche sur la matrice,
caractérisé en ce qu'il comprend également :
- des moyens d'exploration angulaire (14) dans ladite direction perpendiculaire, à une vitesse angulaire déterminée, plus faible que celle du miroir de balayage et d'amplitude angulaire plus élevée,
- un premier et un second trajets optiques utilisables l'un ou l'autre, en amont du miroir de balayage dans le sens de propagation de la lumière, le second trajet ayant un grossissement supérieur à celui du premier et ayant un miroir de déviation dans la direction des colonnes,
- des moyens de commande du miroir (34) de balayage lui donnant, lors de l'utilisation du premier trajet, une vitesse telle que la vitesse angulaire de la ligne de visée par rapport à la matrice corresponde à la cadence de décalage des charges d'une colonne à la suivante et que les trames successives (correspondant chacune à l'amplitude de déplacement du miroir de balayage) aient un recouvrement au moins égal à 1/2 et donnant au miroir de balayage, lors de l'utilisation du second trajet, une vitesse différente, choisie de façon que la vitesse angulaire de la ligne de visée par rapport à la matrice corresponde encore à la cadence de décalage des charges pour une vitesse des moyens d'exploration angulaire inchangée.

2. Dispositif selon la revendication 1, caractérisé en ce que le rapport des grossissements est choisi de façon que la vitesse angulaire de la ligne de visée par rapport à la matrice lors de l'utilisation de la seconde voie corresponde à la vitesse de décalage des charges lorsque le miroir de balayage est arrêté.

3. Dispositif selon la revendication 1 ou 2, caractérisé en ce que les moyens de commande du miroir de balayage (22) sont prévus pour donner à ce miroir, lors de l'utilisation de la seconde voie, une position en dehors de sa plage de débattement en vue du balayage lors de l'utilisation de la première voie.

4. Dispositif selon la revendication 3, caractérisé en ce que lesdits moyens de commande sont prévus pour donner au miroir de balayage une position formant sur la matrice l'image d'une zone de la scène qui, en fonctionnement de veille utilisant la première voie, a été visualisée au cours du balayage précédent.

5. Dispositif selon l'une quelconque des revendications 1 à 4, caractérisé en ce qu'il comprend des moyens (62) de déviation dans la première direction, permettant de sélectionner un emplacement d'observation lors de l'utilisation de la seconde voie.

## Patentansprüche

1. Abbildungsvorrichtung zur Aufnahme eines Bildes, das aus aufeinanderfolgenden Teilbildern besteht, die sich gegenseitig bereichsweise überdecken, mit einer Kamera (10) mit einem sensiblen Organ, das von einer Matrix von Sensoren (30) mit Ladungsspeicherung gebildet ist, in Form eines Barrettes mit einer Mehrzahl von Reihen von Sensoren, die verbunden sind und in einer ersten Feldrichtung der Kamera angeordnet sind, mit einem Umlenkspiegel (22) in der Richtung senkrecht zu der ersten Richtung im Feld der Kamera, welcher mit Betätigungsmitteln versehen ist, die es erlauben, das Abbild eines selben Abschnitts eines Bildes, wobei dieser Abschnitt im Feld der Kamera gelegen ist, nacheinander auf den verschiedenen Reihen der Matrix zu bilden, und mit Mitteln zur Verschiebung der Ladungen einer Reihe zur folgenden mit einem vorbestimmten Tempo, welches mit der Verschiebung des Bildes des Abschnitts auf der Matrix synchronisiert ist,
dadurch gekennzeichnet,
daß diese außerdem aufweist:
- Mittel (14) zur winkelförmigen Untersuchung in der rechtwinkligen Richtung mit einer bestimmten Winkelgeschwindigkeit, die wesentlich geringer als diejenige des Umlenkspiegels ist und eine erhöhtere winkelförmige Amplitude aufweist,
- erste und zweite optische Strecken, von denen die eine oder die andere brauchbar ist, stromaufwärts des Umlenkspiegels im Sinne der Lichtausbreitung, wobei die zweite Strecke eine Vergrößerung oberhalb derjenigen der ersten Strecke hat und einen Ablenkungsspiegel in der Richtung der Reihen aufweist,
- Steuerungsmittel (34) für den Umlenkspiegel, die diesem während des Gebrauchs der ersten Strecke eine solche Geschwindigkeit geben, daß die Winkelgeschwindigkeit der Visierlinie im Verhältnis zur Matrix mit dem Tempo der Verschiebung der Ladungen von einer Reihe zur folgenden übereinstimmt und daß die nachfolgenden Teilbilder (die jeweils mit der Verschiebungsamplitude des Umlenkspiegels übereinstimmen) eine Überdeckung von wenigstens einer Hälfte (1/2) haben und dem Umlenkspiegel während des Gebrauchs der zweiten Strecke eine abweichende Geschwindigkeit geben, die derart ausgewählt ist, daß die Winkelgeschwindigkeit der Visierlinie im Verhältnis zur Matrix noch mit dem Tempo der Verschiebung der Ladungen für eine unveränderte Geschwindigkeit der winkelförmigen Untersuchungsmittel übereinstimmt.

2. Vorrichtung nach Anspruch 1,
dadurch gekennzeichnet,
daß das Verhältnis der Vergrößerungen derart gewählt ist, daß die Winkelgeschwindigkeit der Visierlinie im Verhältnis zur Matrix während des Gebrauchs der zweiten Strecke mit der Ablenkungsgeschwindigkeit der Ladungen übereinstimmt, während der Umlenkspiegel angehalten ist.

3. Vorrichtung nach Anspruch 1 oder 2,
dadurch gekennzeichnet,
daß die Steuermittel des Umlenkspiegels (22) vorgesehen sind, um diesem Spiegel während des Gebrauchs der zweiten Strecke eine Position außerhalb des Ablenkungsbereiches in Sicht der Umlenkung während des Gebrauchs der ersten Strecke zu geben.

4. Vorrichtung nach Anspruch 3,
dadurch gekennzeichnet,
daß die Steuermittel vorgesehen sind, um dem Umlenkspiegel eine Position zu geben, die auf der Matrix das Abbild einer Zone des Bildes bildet, welche im Laufe der Wache während des Gebrauchs der ersten Strecke im Laufe der vorhergehenden Umlenkung visualisiert worden ist.

5. Vorrichtung nach irgendeinem der Ansprüche 1 bis 4,
dadurch gekennzeichnet,
daß diese Mittel (62) zur Ablenkung in die erste Richtung aufweist, welche es erlauben, einen Beobachtungsstandort während des Gebrauchs der zweiten Strecke auszuwählen.

## Claims

1. An imaging system for picking up a scene comprising successive frames partially overlapping one another, comprising a camera (10) having a sensitive element comprising an array of charge-accumulation detectors (30), in the form of an array having a plurality of detector columns attached and disposed in a first direction of the field of the camera, a scanning mirror (22) for scanning in the direction perpendicular to the first direction in the field of the camera, provided with drive means for forming the image of one and the same section of a scene, such section being situated in the field of the camera, successively on the different columns of the array; and means for shifting the charges from one column to the next at a given rate, in synchronism with the movement of the image of the section on the array,
characterised in that it also comprises:
- means (14) for angular tracking in the said perpendicular direction, at a given angular speed, less than that of the scanning mirror and of a higher angular amplitude,
- a first and a second optical path, either of which can be used, upstream of the scanning mirror in the direction of propagation of the light, the second path having a greater magnification than that of the first and having a mirror for deflection in the column direction,
- means for controlling the scanning mirror (34) which, when the first path is used, give the mirror a speed such that the angular speed of the line of sight with respect to the array corresponds to the rate of shifting of the charges from one column to the next and the successive frames (each corresponding to the amplitude of movement of the scanning mirror) have an overlap of at least 1/2, whereas when the second path is used the scanning mirror is given a different speed so selected that the angular speed of the line of sight with respect to the array again corresponds to the rate of charge shift for an unchanged speed of the angular tracking means.

2. A system according to claim 1, characterised in that the magnification ratio is so selected that the angular speed of the line of sight with respect to the array when the second path is used corresponds to the charge shift speed when the scanning mirror is stopped.

3. A system according to claim 1 or 2, characterised in that when the second path is used the control means for the scanning mirror (22) are adapted to give the mirror a position outside its deflection range for the purpose of scanning when the first path is used.

4. A system according to claim 3, characterised in that the said control means are adapted to give the scanning mirror a position which on the array forms the image of a zone of the scene which, in watchkeeping operation using the first path, was displayed during the previous scan.

5. A system according to any one of claims 1 to 4, characterised in that it comprises means (62) for deflection in the first direction to allow an observation position to be selected when the second path is used.
